# EUROPEAN PATENT SPECIFICATION

(11) **EP 2 706 257 B1**
(45) Date of publication and mention of the grant of the patent: **24.03.2021**
(21) Application number: 13183240.4
(22) Date of filing: 05.09.2013
(51) Int. Cl.: F16F 13/16, F16F 13/10, F16F 13/08

(54) **AXIALLY DAMPED HYDRAULIC MOUNT ASSEMBLY**
ACHSENGEDÄMPFTE HYDRAULISCHE MONTAGEANORDNUNG
ENSEMBLE DE MONTAGE HYDRAULIQUE AMORTI DE MANIÈRE AXIALE

(30) Priority: 05.09.2012 US 201213603524
(43) Date of publication of application: 12.03.2014
(73) Proprietor: ContiTech Vibration Control GmbH, 30165 Hannover (DE)
(72) Inventor: Bradshaw, Jeffery Michael, Bloomfield, MI Michigan 48301 (US); Dowson, Chris, Mitchell, Ontario N0K 1N0 (CA)
(74) Representative: Continental Corporation

(56) References cited:
- EP-A2- 0 458 008
- WO-A1-2009/100205
- WO-A1-2011/111354
- WO-A1-2011/114643
- FR-A1- 2 671 839

## Description

### Background of the Disclosure

This disclosure relates to a mount assembly or damper, and particularly a mount assembly that damps vibrations imposed on the assembly in a load bearing environment, including a fluid effect damping that is a combination of frequency dependent resonant damping and broadband viscous damping.

Assemblies that damp vibrations and relative movement between components are well known. Many of these arrangements use an elastomer or natural rubber material disposed between first and housing portions that are secured to first and second vehicle components. It is desirable to limit vibration from the first component to the second component, for example, between a first component such as an automotive frame and a second component such as an engine. For example, an engine mount assembly includes a first housing portion mounted to the frame and a second housing portion secured to the engine and a material such as an elastomer or rubber interposed between the first and second housing portions that damps the vibrations.

When a component in a system is excited at its natural frequency, it can begin vibrating at high amplitudes. These high amplitude vibrations can be transferred from the origin of the excitation through a conventional mount to the side of the system where vibrations are not desirable. An axially damped hydraulic mount can be tuned to the natural frequency of the system and can reduce the transfer of vibrations from one side of the system to the other.

Other axially damped hydraulic mounts are known in the art. Moreover, it is also known to use a true double pumping hydraulic mount in which a hydraulic fluid is selectively conveyed between first (upper) and second (lower) chambers that are interconnected by an elongated path (inertia track). However, these types of hydraulic mounts have some functional limitations because of the need to secure the hydraulic mount via the housing to the surrounding environment.

It is also desirable to use the mount as a load bearing mount, or in combination with a typical shear style body mount in a rebound application, or an engine mount, or suspension mount application. Further, if used in such a combination, undue complexity in the assembly and sealing should also be avoided.

WO2011111354 (A1) describes a liquid seal anti-vibration device with: an inner tube and outer tube; rubber bodies connecting said inner and outer tubes in a liquid-tight manner at two positions separated in the axis direction; a partition wall which, disposed between the two rubber bodies, divides into two parts in the axis direction the space between the inner and outer tubes and which comprises an annular rigid member and an elastic member; liquid chambers formed by sealing a non-compressible fluid in each of the spaces formed by the partition wall; and a restricted passage allowing communication between the two liquid chambers formed by the partition wall. The aforementioned partition wall is configured from the annular rigid member, which protrudes from the inner tube towards the outer tube side, and from the elastic member, which connects said annular rigid member to the outer tube. The aforementioned restricted passage is configured from one or multiple passage grooves, which, formed on the outer peripheral surface of the annular rigid member, extend at least one time around the circumference thereof, and from a bounding rigid tube member which, attached to the aforementioned elastic member, seals the openings of the passage grooves via a seal member in a liquid-tight manner.

WO2009100205 (A1) describes a hydromount assembly which includes a first fluid chamber and a second fluid chamber that communicate with one another through an inertia track. The inertia track is interposed between the first and second fluid chambers, and is used as a fluid actuating plunger to move relative to at least one of the first and second chambers in response to vibration to pump fluid from the first chamber to the second chamber, and vice versa, through the inertia track. An opening extends through the first and second fluid chambers and the inertia track and receives a shaft therein. The inertia track is secured to the shaft so that axial movement of the shaft results in axial movement of the inertia track. Elastomeric portions of the hydromount may be differently tuned from one another. The center mount hydromount may be selectively assembled with a body mount, or the body mount integrated into the hydromount whereby the center mount arrangement increases the functionality of the damper.

### Summary of the Disclosure

A hydromount assembly includes first and second chambers separated by an inertia track having a passage that communicates with the chambers. An opening through a central portion of the inertia track is dimensioned to receive an associated fastener therethrough.

A hollow shaft extends through the first and second chambers and the inertia track, such that axial movement of the shaft results in axial movement of the inertia track to selectively pump fluid from one of the first and second fluid chambers to the other of the fluid chambers.

The inertia track is secured about an outer perimeter portion to an elastomeric material allowing the inertia track to selectively move in response to movement of the shaft that extends through the opening.
The inertia track preferably includes first and second portions separated along a plane perpendicular to an axis of the central portion opening.

The inertia track is secured about an outer perimeter portion to an elastomeric material allowing the inertia track to selectively move in response to movement of a shaft extending through the opening.

First and second, or first, second and third elastomeric elements have the same or different conformations or are formed from the same or a different material than one another.

A housing is received around the first and second fluid chambers and the inertia track, and a portion of the housing is crimped to compress inner perimeter portions of the inertia track and create a fluid seal.

An alternate sealing method comprises forming the inertia track from two stamped metal pieces and using the outer metal of the center molded component to crimp the upper and lower molded components.

A primary benefit of the disclosure relates to mounting through the center of the hydromount to significantly increase the functionality of the damper.

Another benefit resides in using the inertia track as a plunger that actuates fluids between the first and second fluid chambers to create a frequency dependent fluid effect damping.

Ease of assembly and a simplified manner of sealing the components together is also provided by the present disclosure.

An example mount assembly includes a first chamber, at least partially defined by a first elastomeric element and a second chamber, at least partially defined by a second elastomeric element. The assembly also includes an inertia track having a central opening defining an axis. The inertia track defines a serpentine passage in fluid communication with the first chamber and the second chamber. The inertia track is moveable along the axis relative to the first elastomeric element and the second elastomeric element.

An example mount assembly includes a first chamber, at least partially defined by a first elastomeric element and a second chamber, at least partially defined by a second elastomeric element. The assembly also includes an inertia track having a central opening defining an axis. The inertia track defines at least one passage in fluid communication with the first chamber and the second chamber. The inertia track is moveable along the axis relative to the first elastomeric element and the second elastomeric element. The assembly includes a hollow tube that seals against an axial end of the inertia track on a second chamber side.

An example mount assembly includes a first chamber, at least partially defined by a first elastomeric element and a second chamber, at least partially defined by a second elastomeric element. The assembly also includes an inertia track having a central opening defining an axis. The inertia track defines at least one passage in fluid communication with the first chamber and the second chamber. The inertia track is moveable along the axis between the first chamber and the second chamber. The assembly includes a shaft defining a shoulder that abuts a first axial end of the inertia track and a hollow tube that seals against a second axial end of the inertia track.

One aspect of the present invention relates to a hydromount assembly comprising:
a first chamber and a second chamber;
an inertia track separating the first chamber and the second chamber, the inertia track having a central opening and including, relative to the central opening, a radially inner surface and a radially outer surface, the inertia track having a passage between the radially inner surface and the radially outer surface that fluidly connects the first chamber and the second chamber;
an engagement member at least partially disposed in the opening of the inertia track and rigidly coupled to the inertia track to move in unison with the inertia track; and
a shaft extending through the central opening, the shaft including a first shaft section and a second shaft section, the first shaft section and the second shaft section contacting the engagement member.

The hydromount assembly may further include a first elastomeric element on the first shaft section and a second elastomeric element on the second shaft section.

The first elastomeric element may be at least partially disposed between the first shaft section and the inertia track and the second elastomeric element may be at least partially disposed between the second shaft section and the inertia track.

The passage may be a serpentine passage.

The hydromount assembly may further include a first elastomeric element, a second elastomeric element, and a third elastomeric element free of contact with each other.

The first shaft section abuts the engagement member on a first axial side and the second shaft section abuts the engagement member on a second, opposite axial side.

The engagement member may be annular.

The engagement member may include a diametrically outer surface disposed at least partially in a groove of the inertia track.

Another aspect of the present invention relates to a hydromount assembly comprising:
an upper mount having a first elastomeric element;
a lower mount including an upper portion having a second, different elastomeric element, a central portion having a third, different elastomeric element, and a lower portion having a fourth, different elastomeric element, the lower mount including a shaft, wherein the upper portion includes a first shaft section, the lower portion includes a second shaft section, and the central portion includes an engagement member disposed in the inertia track between the first shaft section and the second shaft section; and
an inertia track having a passage fluidly connected with a first chamber and a second chamber, wherein the upper portion and central portion at least partially define the first chamber and the lower portion and the central portion at least partially define the second chamber, wherein the inertia track separates the first chamber and the second chamber, the inertia track having a first central opening about an axis, wherein the shaft extends through the first central opening.

The second elastomeric element, the third elastomeric element, and the fourth elastomeric element may be free of contact with each other.

The first elastomeric element and the second elastomeric element may be in contact.

The second elastomeric element may be bonded to the first shaft section, the fourth elastomeric element may be bonded to the second shaft section, and third elastomeric element may be bonded to the inertia track.

The upper portion may include an upper housing bonded to the second elastomeric element, the central portion may include a central housing bonded to the third elastomeric element, and the lower portion may include a lower housing bonded to the fourth elastomeric element.

The first shaft section and the second shaft section may sealingly engage the inertia track.

The third elastomeric element may be disposed at a radially outer surface of the inertia track.

The third elastomeric element may extend around the periphery of the inertia track.

The third elastomeric element may extend from the inertia track to a housing of the central portion such that the first chamber is sealed from the second chamber.

A still further aspect of the present invention relates to a method of installing a hydromount assembly, the method comprising:
providing an upper mount including a first elastomeric element, and a lower mount including an upper portion including a second elastomeric element, a central portion including a third elastomeric element and an inertia track having a passage that fluidly communicates with a first chamber and a second chamber, and a lower portion including a fourth elastomeric element;
aligning the upper portion, central portion, and lower portion, wherein the upper portion and central portion define the first chamber and the lower portion and the central portion defines the second chamber, wherein the first chamber and the second chamber are separated by the inertia track having a first central opening about an axis dimensioned to receive a shaft therethrough, wherein at least one second opening radially outwards of the inertia track extends through the upper portion, central portion, and lower portion along the axis; and
inserting at least one fastener through the at least one second opening to secure the upper portion, the central portion, and the lower portion together.

A third opening may extend through the upper mount and may be arranged to receive the fastener.

The method may include the step of disposing the at least one fastener into the at least one third opening.

Still other features and benefits will be found in the following detailed description.

### Brief Description of the Drawings

Figure 1 is an exploded view of a three piece hydraulic body mount assembly.
Figures 2 and 3 are perspective views of the assembled hydraulic body mount assembly of Figure 1.
Figures 4 and 5 are exploded and installed views of the hydraulic mount assembly of Figures 1-3 in a shear style body mount design.
Figure 6 is a longitudinal cross-sectional view of the double pumping hydraulic damper or hydromount assembly.
Figure 7 is a longitudinal cross-sectional view of the three-piece hydraulic body mount assembly.
Figure 8 is a perspective view of a center-fastened double pumping hydromount assembly.
Figure 9 is a longitudinal cross-sectional view of the hydromount assembly of Figure 8.
Figure 10 is a perspective view of another example of a hydraulic body mount assembly.
Figure 11 is an exploded view of the mount assembly of Figure 10.
Figure 12 is a longitudinal cross-sectional view of the mount assembly of Figure 10.
Figure 13 is a perspective view of another embodiment of a hydraulic body mount assembly.
Figure 14 is an exploded view of the mount assembly of Figure 13.
Figure 15 is a cross-sectional view of the mount assembly of Figure 13.

### Detailed Description of the Preferred Embodiments

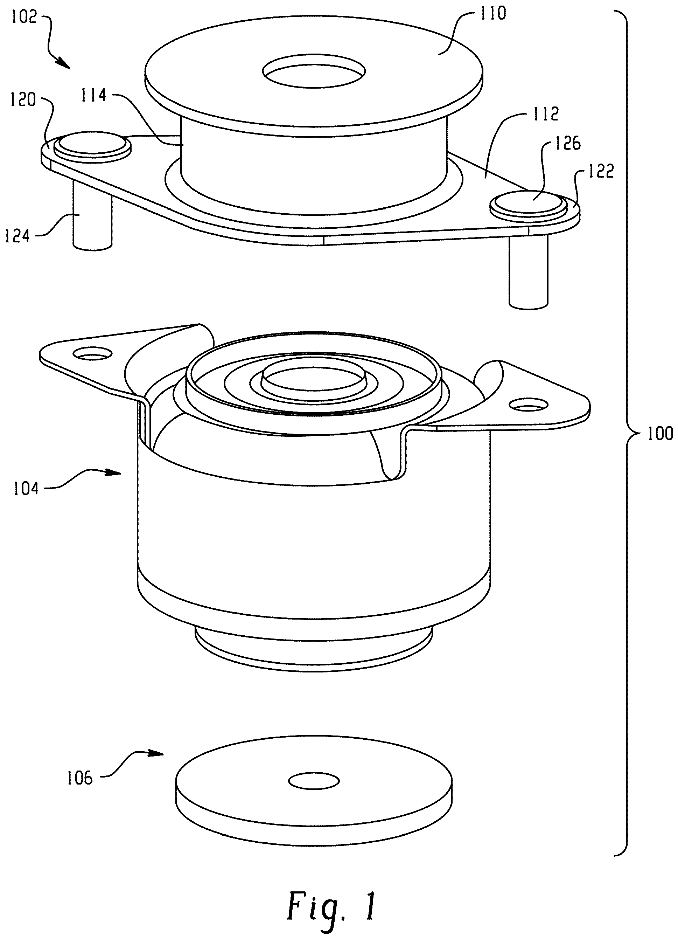

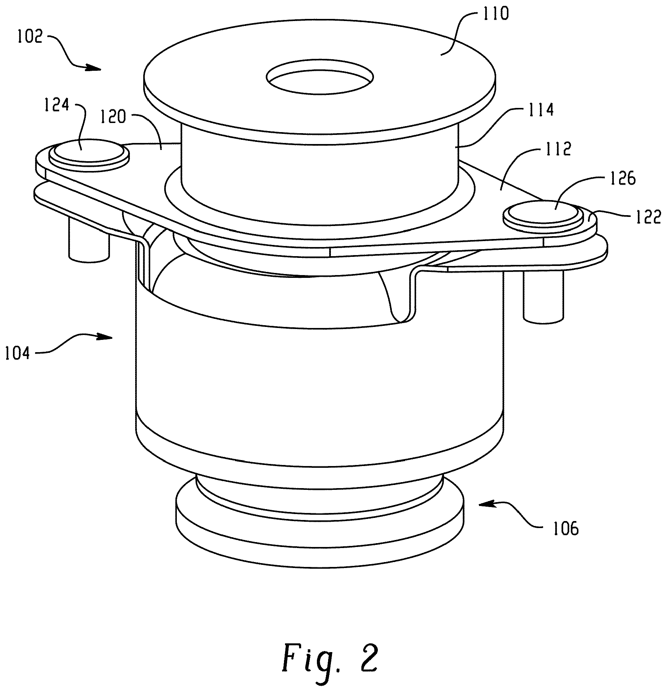

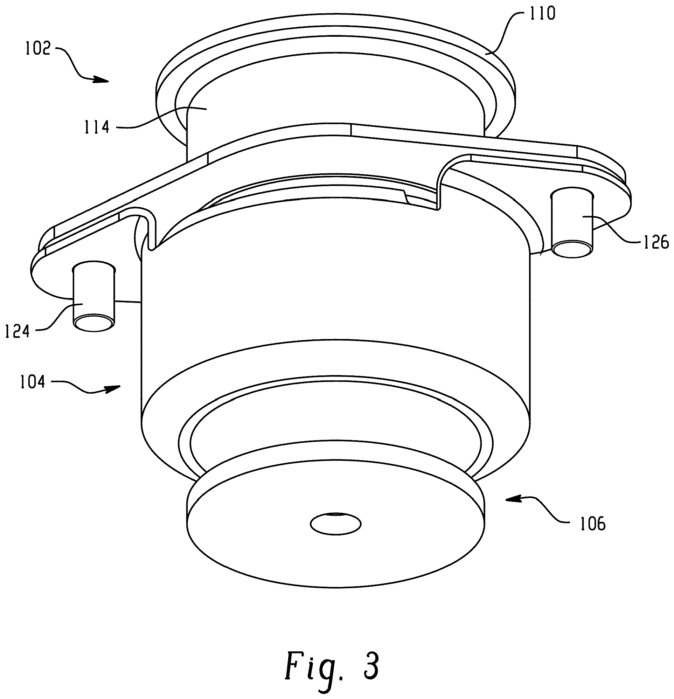

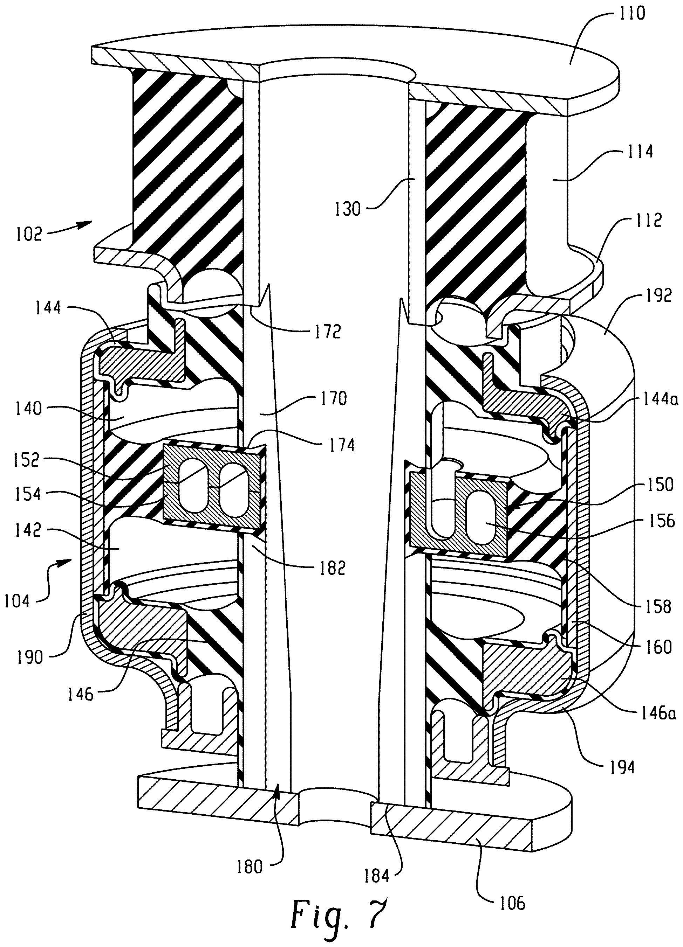

Turning first to Figures 1-3, a mount assembly or damper 100 is illustrated. An example of a mount assembly 100 includes a load bearing body mount 102, a hydraulic damper 104, and a travel restricting washer 106. The assembly 100 allows for a fastener such as a bolt (not shown) to pass through the center of the hydraulic damper, and in this case the body mount, while still creating damping in the axial direction. More particularly, the load bearing body mount 102 includes an upper, first component such as bearing plate 110 spaced from a lower, second component or mounting plate 112. The load bearing body mount further includes a damping member (sometimes referred to as a main rubber element or MRE) such as an elastomeric material or natural rubber 114 that is secured at opposite ends to the first component 110 and the second component 112, respectively. For example, the damping member may be mold bonded to the plates 110, 112 in a manner well know in the art. The mounting plate preferably includes first and second flanges 120, 122 that extend laterally outward and include openings that receive fasteners 124, 126, respectively. As perhaps best evident in Figure 7, the body mount further includes a central hollow rigid sleeve 130 that extends through the elastomeric member and is mold bonded along an external surface thereof with the elastomeric member. The rigid components of the mount (e.g., plates 110, 112 and sleeve 130) are preferably formed from any suitably hard material (composite, aluminum, steel, etc.), and any suitably performing compliant substance (generally referred to as an elastomer which includes an elastomer, natural rubber, etc.) can be used in the compliant portion of the system. The plate 110 and the sleeve 130 are preferably formed from separate metal components that are subsequently joined (e.g., welded) together for ease of assembly, although it will be understood that the sleeve and the plates 110, 112 may be formed from the same type of rigid material (for example, metal) or from a rigid composite material. Further, the bearing plate 110 and the sleeve 130 could be a deep drawn integral or homogeneous structural arrangement, however, the least expensive arrangement is to form the bearing plate and sleeve as separate components, and subsequently join the individual components together.

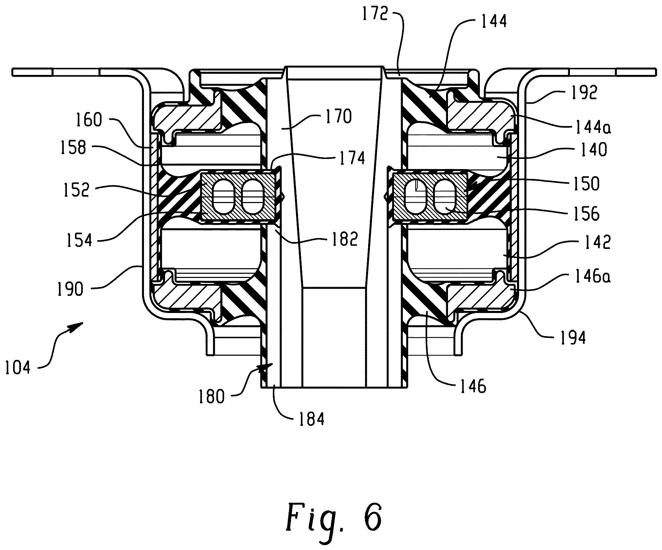

The hydraulic damper or hydromount 104 is illustrated in Figures 1-5 and more particular details are shown in the cross-sectional views of Figures 6 and 7. The hydraulic damper is a "double pumper" design where hydraulic fluid is forced back and forth by the pumping action of opposing elements, i.e., upper and lower fluid chambers140, 142. The concept of a double pumping hydraulic mount is known in the art; however, the hydraulic damper 104 allows for a fastener such as a mounting bolt (not shown) to extend through the hydraulic damper without adversely impacting the functional operation of the hydraulic damper portion of the assembly. Particularly, in the illustrated preferred example, an upper or first main rubber element (MRE) 144 forms a first or upper end of the upper fluid chamber 140 and similarly a lower or second main rubber element 146 for a first or lower end of the lower fluid chamber 142. The first and second fluid chambers are separated by an inertia track 150 which is an elongated, preferably serpentine interconnecting passage that ads in damping vibrations between the upper and lower ends of the hydromount. For example, the inertia track is typically a stationary component that has a winding path shown here as being formed from first and second stamped components 152, 154 that abut against one another, and together form a continuous passage 156. The passage 156 communicates with the upper fluid chamber 140 at one end and with the lower fluid chamber 142 at the other end. Vibrations are damped by the inertia track in a manner well known in the art and in addition this structural arrangement provides for viscous fluid damping where the fluid flow through the passage is limited due to the cross-sectional dimension of the passage and thereby provides the viscous fluid damping between the first and second fluid chambers. In the present arrangement, the inertia track 150 is a movable component that spans between the first and second fluid chambers and is resiliently mounted about an outer peripheral portion with elastomer sidewall 158. The sidewall 158 may be formed at least partially from a rigid component such as a generally cylindrical rigid element or sidewall 160, and likewise portions of the end 144 of the first fluid chamber 140 and the end 146 of the second fluid chamber 142 may include rigid components 144a, 146a. Preferably, however, the remainders of the first and second fluid chambers are formed from an elastomeric/rubber material so that the ends 144, 146 may selectively move or deflect and cause a pumping action of the fluid through the inertia track passage and between the first and second chambers.

Further, a rigid inner hollow shaft 170 extends through the hydromount and is adapted to receive a fastener (not shown) therethrough. As seen in Figure 7, the shaft 170 in the hydromount preferably aligns with the sleeve 130 in the body mount in order to easily assemble these damping components together. An opening through shaft is shown as preferably having a tapered conformation that decreases in size as the shaft extends axially from the first fluid chamber to the second fluid chamber. A first shoulder 172 is dimensioned to abuttingly engage and align the shaft with the sleeve at the upper end of the hydromount. A second shoulder 174 is dimensioned to abuttingly and sealingly engage the inertia track, namely a first or upper surface thereof, at a radial inner location. As a result of molding the inertia track in an elastomeric material, the elastomeric material at this inner radial location serves as a seal between the shaft second shoulder 174 and the inertia track 150. Similarly, a rigid hollow tube 180 is received over the other end of the shaft so that a first end 182 of the tube seals against a second or underside surface of the inertia track at the inner radial location. In this manner, the first and second fluid chambers are sealed from one another along the inner radial region as a result of the shaft second shoulder and the tube 180. A second end 184 abuts against the washer 106.

The hydromount further includes a rigid, metal housing (sometimes referred to as a can or shell) 190 that encompasses the separately molded first and second main rubber elements 144, 146 disposed at axial opposite ends of the first and second fluid chambers 140, 142, and the separately molded inertia track. Preferably, a first or upper end 192 of the housing sealingly engages the first main rubber element 144 and by deforming or crimping the first end 192 radially inward, the hydromount is sealed at the first/upper end. That is, the housing first end seals against an outer peripheral region of the first main rubber element 144. An inner peripheral region of the first main rubber element, that preferably includes rigid insert 144a, is sealed or mold bonded to a radial outer surface of the shaft 170 to form a first subassembly of the hydromount assembly. The second main rubber element 146, which also preferably includes the rigid insert 146, is sealed (preferably by mold bonding) to an outer peripheral surface of the tube 180 to form a second subassembly of the hydromount assembly. A second or lower end 194 of the housing receives the second subassembly or second main rubber element therein. Rigid sidewall 160 is connected to an outer periphery of the inertia track via an elastomeric material that is preferably mold bonded thereto to form a third subassembly. The elastomeric material preferably extends along the entire height or interior surface of the sidewall 160 so that when assembled in the housing, the sidewall forms outer peripheral portions of the first and second fluid chambers and axially spans and seals against the first main rubber element 144 at a first or upper end to the second main rubber element 146 at a second or lower end.

To assemble the hydromount, the sidewall 160 is advantageously located in a mold with the first and second components 152, 154 of the inertia track to form one of the molded subassemblies. The first main rubber element is molded to an external surface of the shaft to form another of the molded subassemblies. Likewise, the second main rubber element is molded to an external surface of the tube to form still another of the molded subassemblies. The three subassemblies are introduced into the housing one atop another and the second shoulder abuttingly seals against the upper, inner peripheral portion of the inertia track and the tube is pressed over the shaft to compress and seal along a lower, inner peripheral portion of the inertia track. A single deformation or crimp is formed in the housing at the first end 192 with the three subassemblies received in position in the housing to compress the housing against the first main rubber element, and likewise compress the three subassemblies together.

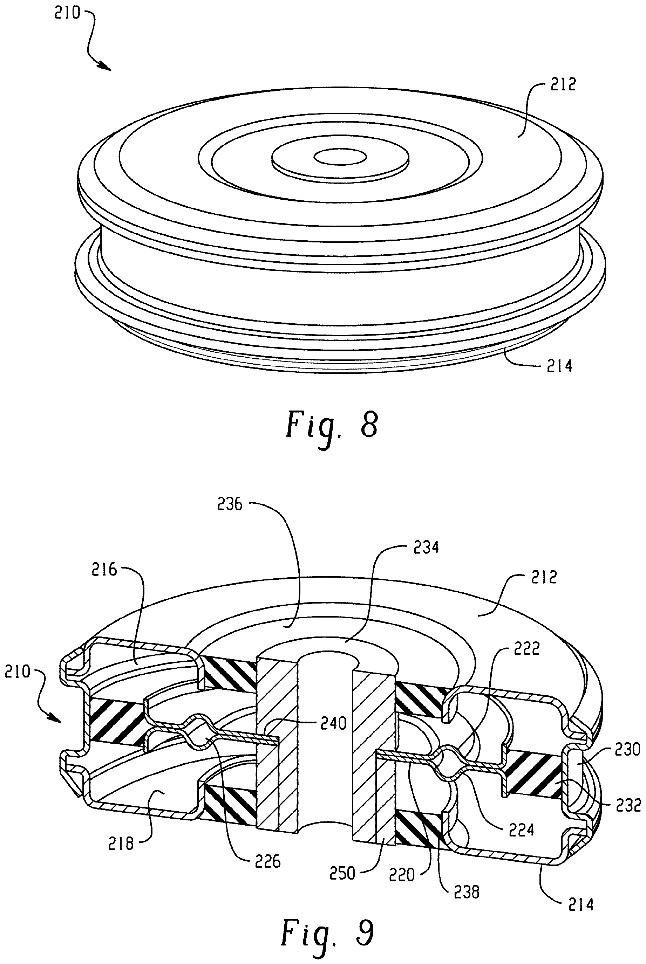

As illustrated in Figures 8 and 9, an alternative hydromount assembly 210 that a first or upper molded component 212 and a second or lower molded component 214, that form a first/upper portion of a first fluid chamber 216 and a second/lower portion of a second fluid chamber 218, respectively. The fluid chambers are in fluid communication via an inertia track 220 that includes first and second stamped metal inertia track portions 222, 224, for example, that abut one another to form an elongated inertia track passage 226 that communicates with the first fluid chamber at one end and the second fluid chamber at the other end. A third or center molded component 230 is radially spaced and interconnected with the inertia track portions 222, 224 by an annular elastomeric or rubber member 232 that is preferably secured (e.g., mold bonded) along an inner periphery to the metal components and along an outer periphery to the third molded component 230 to form one of the subassemblies. A second molded subassembly includes shaft 234 molded along an outer surface thereof to an inner perimeter portion of a second annular elastomeric/rubber member 236, and an outer perimeter portion of the second rubber element 236 is mold bonded to the molded component 212 to form a second subassembly. A third annular elastomeric/rubber member 238 is molded along an outer perimeter portion with the inner surface of the second molded component 214 and also molded along an inner perimeter portion with a tube 250. Further, the shaft includes a shoulder 240 that abuttingly engages and seals with an inner diameter region of the inertia track. Likewise, a sleeve 250 is press fit over the shaft 240 and the sleeve abuttingly engages an underside of the inertia track to seal thereagainst. The center molded component includes flanges at opposite axial ends that are crimped or deformed into locking engagement with outer peripheries of the first and second molded components to hold the three subassemblies together in a single assembly.

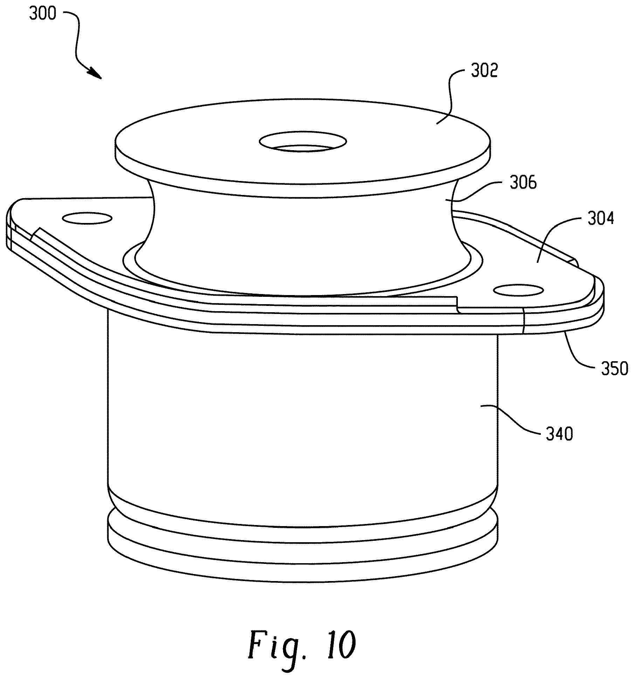

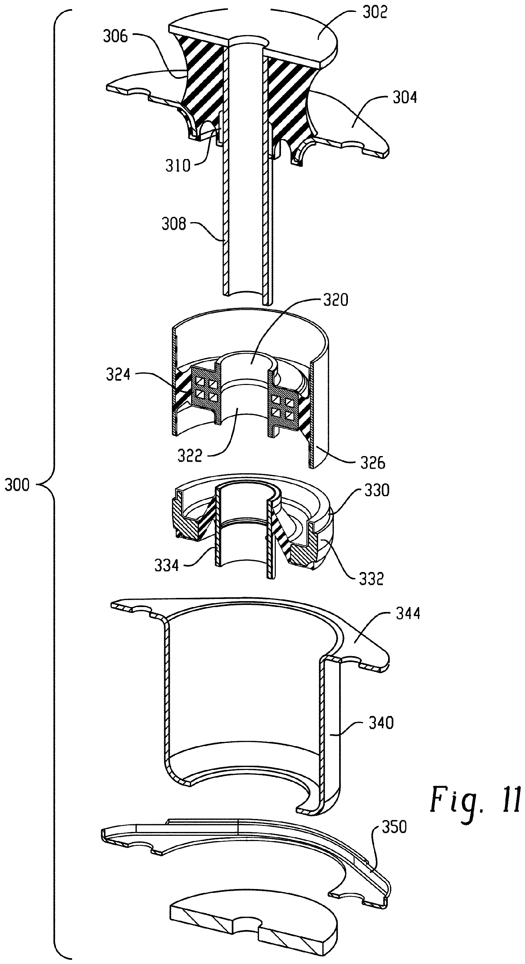

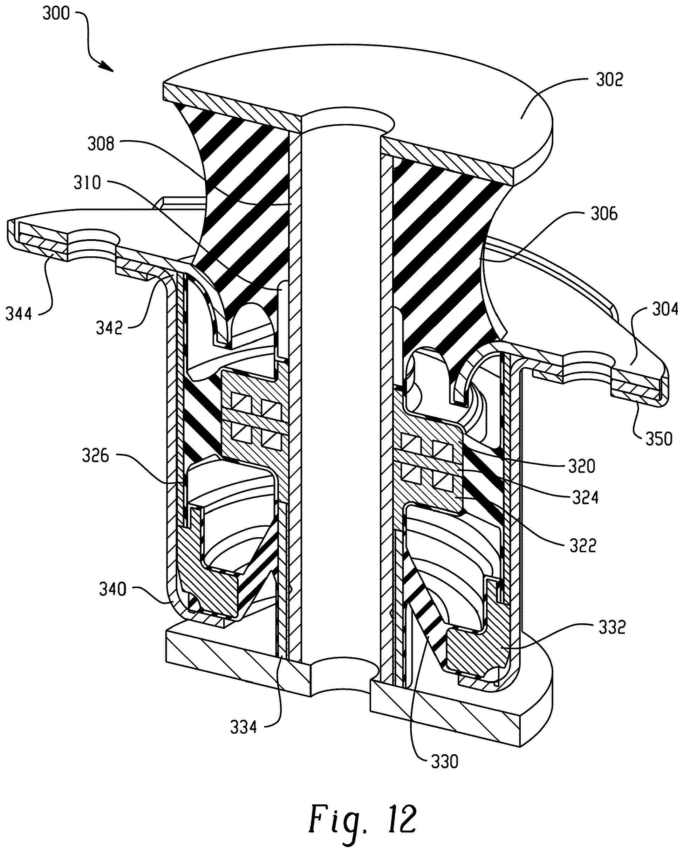

Figures 10-12 have similar structures and functions to the previously described examples. Again, separately molded subassemblies are compressed together in a housing, although in this arrangement, the body mount is integrated into the first main rubber element. More specifically, body mount 300 includes an upper, first component or bearing plate 302 spaced from a lower, second component of mounting plate 304. The plates 302, 304 are spaced by a first main rubber element 306 which also serves to form an upper surface of the first fluid chamber. The first main rubber element is molded to the two plates 302, 304, and also to shaft 308 extending downwardly from a first or lower surface of the plate 302. If desired, rigid ring member or tube 310 is molded in the rubber element 306 along a lower, inner perimeter portion of the first rubber element.

The second subassembly includes a three-piece inertia track assembly which extends the length of the passage almost two-fold in comparison to the passages of the prior examples by using inner and outer radial passages formed in a first or upper portion 320, a second or lower portion 322, and a separating plate 324 that has an opening that connects passage portions in the upper inertia track portion 320 with the passage portions in the lower inertia track portion 322. Sidewall 326 has an inner surface that is molded to the inertia track assembly by an elastomeric member that preferably encompasses the three-part inertia track assembly.

The third subassembly includes a second main rubber element 330 that preferably includes a rigid insert 332 along an outer radial portion and is molded to a tube 334 along an inner radial portion. The third subassembly in conjunction with the inertia track portion forms the second or lower fluid chamber.

Housing 340 receives the third subassembly, then the inertia track subassembly, and then the first subassembly through an open top 342. The housing further includes a radially extending flange 344 that abuts with a lower or underside surface of the mounting plate 304. A crimping member 350 then joins the flange 344 and plate 304 together to press the first, second and third subassemblies together in sealed relation in the housing.

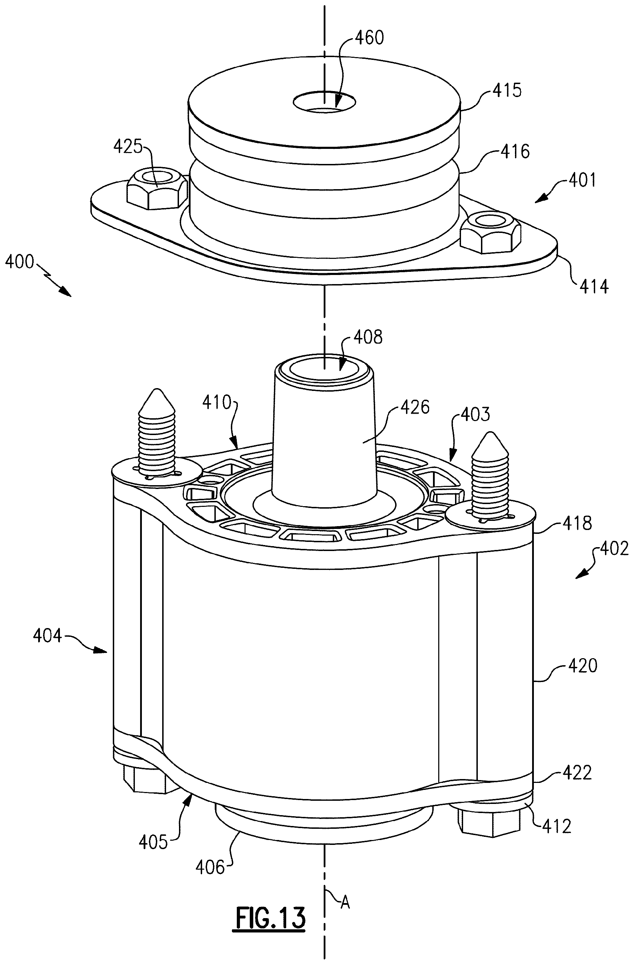

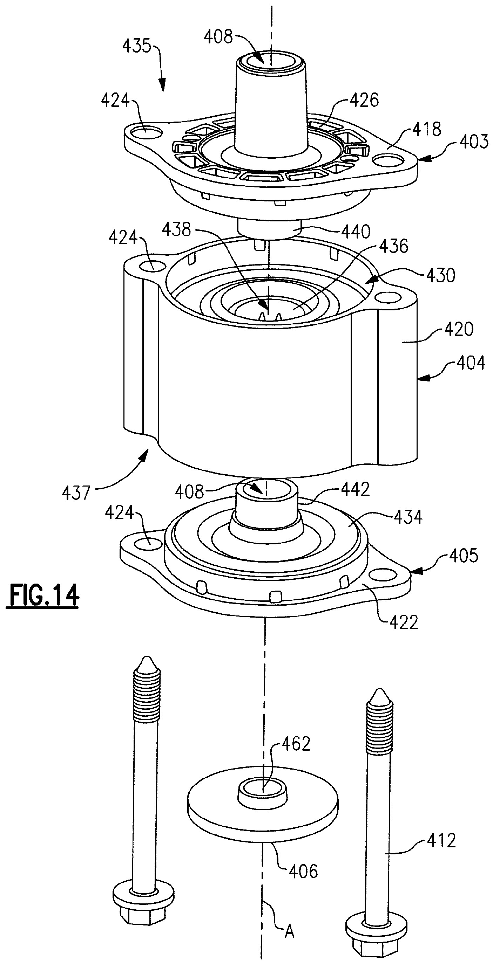

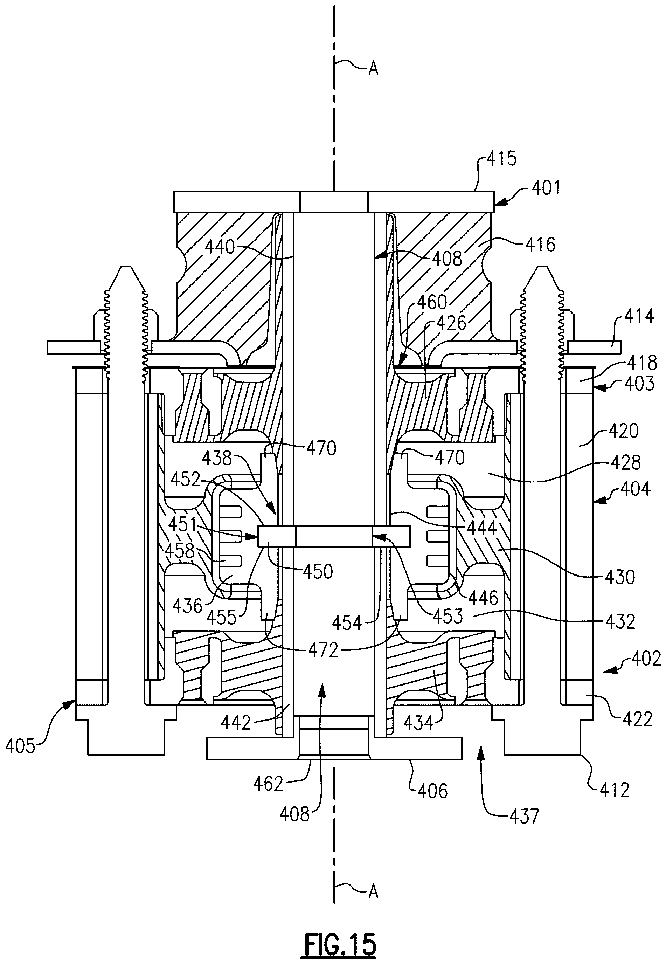

Figures 13-15 have similar structures, features, and functions to previously described examples and may incorporate the features of examples described in this disclosure. The body mount assembly 400 includes an upper mount 401 and a lower mount 402 disposed about axis A. Upper mount 401 is disposed on the first end 410 of lower mount 402 and is attached to lower mount 402 via fasteners 412. A fourth main rubber element 416 is disposed between the base 414 and the upper portion 415 of the upper mount 401. Upper mount 401 includes at least one opening 425 which each receive one of the fasteners 412.

Lower mount 402 includes an upper section 403, central section 404, and lower section 405. The central section 404 is arranged between the upper section 403 and lower section 405 along axis A to form the lower mount 402. Upper section 403 includes an upper housing 418, central section 404 includes a central housing 420, and lower section 405 includes a lower housing 422. At least one opening 424 is disposed at a position radially outward of shaft 408 through each of the upper housing 418, central housing 420, and lower housing 422. The opening 424 is arranged to receive the fastener 412 such that the upper section 403, central section 404, and lower section 405 are attached. Upper mount 401 includes at least one opening 425 to receive the fastener 412 such that the upper mount 401 is attached to the lower mount 402. Openings 425 is aligned with openings 424 to receive the fastener 412.

During assembly of the body mount assembly 400, upper section 403, central section 404, and lower section 405 are aligned and extend along axis A. At least one fastener 412 is inserted in the openings 424 to attach upper section 403, central section 404, and lower section 405. Additionally, upper mount 401 extends along axis A to align with lower mount 402 such that fastener 412 is inserted in openings 425 to attached upper mount 401 and lower mount 402. In the example embodiment, two fasteners 412 are used. In one example, the fasteners 412 are bolts which extend through the openings 424.

Upper section 403 includes a first main rubber element 426 which at least partially defines a first chamber 428 of the lower mount 402. The central section 404 includes a third main rubber element 430 which at least partially defines the first chamber 428 and a second chamber 432. The lower section 405 includes a second main rubber element 434 which at least partially defines the second chamber 432. In this example, the first main rubber element 426, the third main rubber element 430, and the second main rubber element 434 are arranged such that they do not contact one another. However, other arrangements may be used.

Central section 404 further includes an inertia track 436 which defines an opening 438 to receive a shaft 408 there through. The inertia track 436 includes passage 458 and aids in damping vibrations between the upper end 435 and lower end 437 of the body mount assembly 400. The passage 458 fluidly connects the first chamber 428 and second chamber 432. The inertia track 436 is a movable component that spans between the first chamber 428 and second chamber 432 and is resiliently mounted about an outer peripheral portion of the shaft 408. The first main rubber element 426, the third main rubber element 430, and the second main rubber element 434 are formed so that the inertia track 436 may selectively move or deflect and cause a pumping action of fluid through the passage 458 to move fluid between the first chamber 428 and the second chamber 432. In one example, the passage 458 is a serpentine passage. The inertia track 436 may also include the features of any inertia track 436 of the present disclosure.

The shaft 408 includes a first shaft section 440, integral with the upper section 403 and a second shaft section 442 integral with the lower section 405. However, the first shaft section 440 and second shaft section 442 may be integrally formed or independently formed. The shaft 408 extends through the lower mount 402. The shaft 408 extends through opening 438 of the inertia track 436 such that the shaft 408 is disposed at a radially inner surface 444 of the inertia track 436 relative to the opening 438. Inertia track 436 also includes a radially outer surface 446.

An engagement member 450 includes a diametrically outer surface 451 and a diametrically inner surface 453. The diametrically outer surface 451 is disposed at least partially in a groove 455 of the inertia track 436 at the radially inner surface 444 to rigidly couple the engagement member 450 and the inertia track 436 such that the engagement member 450 moves with the inertia track 436 during operation. Engagement member 450 moves with the inertia track 436 in unison such that movement of the inertia track 436 in a direction results in movement of the engagement member 450 in the same direction. The engagement member 450 is disposed an equal distance between upper flanges 470 and lower flanges 472 of the inertia track 436. First shaft section 440 abuts the engagement member 450 on a first side 452 and second shaft section 442 abuts the engagement member 450 on a second side 454 such that the first shaft section 440 and the second shaft section 442 are on opposing sides 452, 454 of the engagement member 450. In this example, the engagement member 450 is annular.

The inertia track 436 includes the upper flanges 470 and lower flanges 472 extending in a generally axial direction along axis A. The first main rubber element 426 of upper section 403 is at least partially disposed between the shaft 408 and upper flanges 470 of the inertia track 436. The first main rubber element 426 is disposed in the upper section 403 and on the first shaft section 440. Similarly, at least a portion of the second main rubber element 434 of the lower section 405 is disposed between lower flanges 472 of the inertia track 436 and the shaft 408. The second main rubber element 434 is disposed in the lower section 405 and on the second shaft section 442.

The third main rubber element 430 of central section 404 is disposed on the radially outer surface 446 of the inertia track 436 and extends around the entire periphery of the inertia track 436. The third main rubber element 430 and the inertia track 436 separate the first chamber 428 and the second chamber 432. The third main rubber element 430 is disposed in the central housing 420 and extends between the central housing 420 and the inertia track 436 such that the first chamber 428 is sealed from the second chamber 432.

As shown, the first shaft section 440 extends both into the central section 404 of the lower mount 402 and into an opening 460 of the upper mount 401. The first main rubber element 426 is arranged such that during operation, the first main rubber element 426 can contact fourth main rubber element 416.

In one example, a washer 406 is disposed at a lower end 437 of the lower mount 402 to prevent movement of the upper mount 401 and lower mount 402 during operation. Opening 462 of the washer 406 has a diameter sized to receive the shaft 408.

In one example, the upper housing 418, the central housing 420, and the lower housing 422 are made of the same material, such as aluminum. In one example, the engagement member 450 is a steel ring.

When the first shaft section 440 and second shaft section 442 are inserted into the opening 438 of the inertia track 436, a seal is created between the first main rubber element 426 and the inertia track, and the second main rubber element 434 and the inertia track 436.The first chamber 428 and second chamber 432 are sealed on the lower mount 402 and from each other such that fluid is only communicated through the inertia track 436.

Independent axial dynamic tuning, using the fluid effect of the mount, as deemed necessary by the system in which it is installed can be provided while providing mounting through the center of the shaft, and with the inertia track mounted to the shaft. In these designs, the shaft with through fastener or through bolt is allowed to move relative to the outer housing/third molded component. The inertia track therefore becomes the physical member or plunger that actuates the fluid between the upper and lower chambers thereby creating frequency dependent fluid effect damping. An inertial track also pumps resulting in additional viscous damping. The combination of viscous damping and a tuned track (inertia track) to create simultaneous broad-band and resonating fluid damping is believed to be unique, and substantially different than known hydromounts.

These multi-piece designs of the assembly allow a great range of rubber tuning as the upper load bearing mount can use a different rubber hardness and/or compound than that of the lower hydraulic damper. For example, butyl rubber could be used in the load bearing body mount and natural rubber could be used in the hydraulic damper, or vice versa.

A fastener through the center of the mount significantly increases the functionality of the damper. Although these mounts can be used as load bearing mounts, one of the unique characteristics is that the hydromounts could be used in conjunction with a typical shear style body mount in a rebound application. Further applications for these designs as either a load bearing mount, or as an addition to a load bearing mount, are engine mount or suspension mount applications. These designs also reduce the assembly and sealing complexity that would be expected of center fastening, double pumping, hydraulic mounts.

As noted above, the axially damped hydraulic mount uses the inertia track as the fluid actuating plunger and allows a fastener to pass through the center of the mount. This axially damped hydraulic mount uses a configuration that allows for the same triaxial static rates and travels as a conventional elastomeric mount. The present disclosure improves the durability of a hydraulic actuated mount by separating the load bearing portion of the mount from the damping (fluid filled) portion of the mount.

The axially damped, double pumping, hydraulic mount of the present disclosure can be used in applications where higher levels of damping than conventional elastomeric mounts are capable of are required. The embodiments of the present disclosure can be used in applications where the only means of fastening the mount to the system in which it is being used is through the center of the mount. The mount can be used in packaging situations where other mounts would not otherwise fit.

Additional tuning flexibility is achieved because the three legs or main rubber elements (MRE) can be tuned independently of each other. It will be further understood by those skilled in the art that the shape or conformation of the mount need not be round but can also adopt other shapes, e.g., rectangular, square, etc.

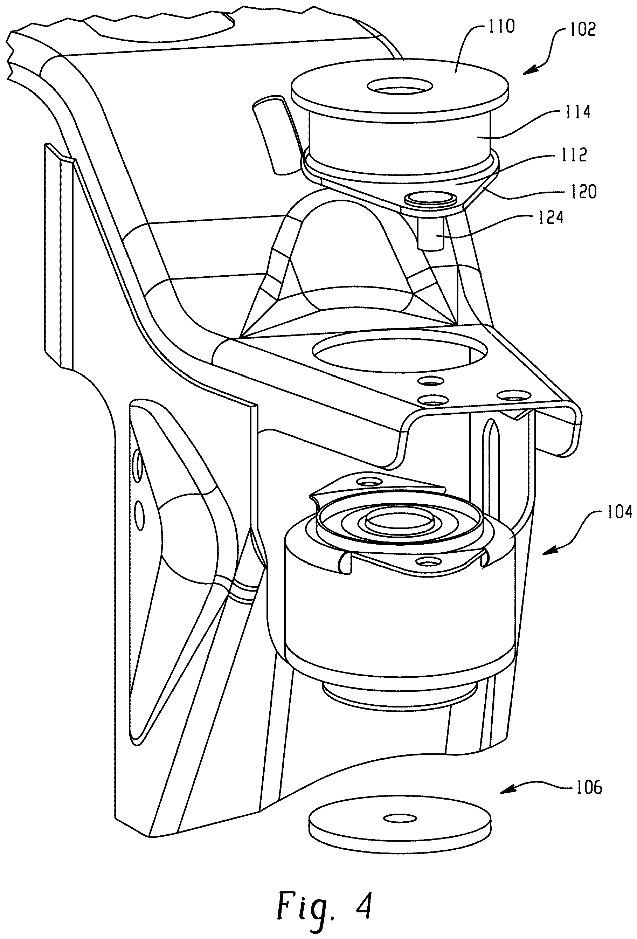

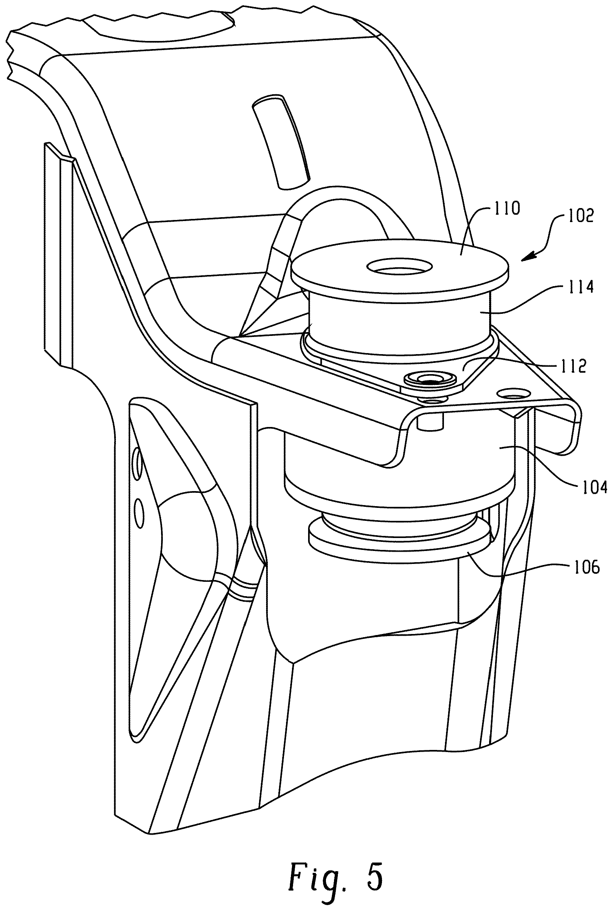

This hydraulic mount design works well in shear style body mount designs because it allows the hydraulic damping portion of the body mount to be located under the "pedestal" or frame side bracket (see Figures 4 and 5 where the hydromount 104 is located beneath the pedestal). This allows for considerable design flexibility for the frame and body structures. It will be appreciated, however, that the hydraulic portion of the mount can also be installed below the vehicle frame bracket.

The damper of this disclosure also allows for independent axial dynamic tuning, using the fluid effect of the mount as deemed necessary by the system into which it is installed.

Another key feature of the present disclosure is the ease of assembly and unique sealing method for a double pumping hydraulic mount. The damper portion of the mount is sealed with a single crimp, which compresses the seal on the inner molded components. A tube is pressed over the inner shaft to compress the seals at the inertia track. An alternate sealing method comprises forming the inertia track from two stamped metal pieces and using the outer metal of the center molded component to crimp the upper and lower molded components. A tube press-fit over shaft seals the inertia track.

The invention has been described with reference to the preferred embodiment. Modifications and alterations will occur to others upon reading and understanding this specification. It is intended to include all such modifications and alterations in so far as they come within the scope of the appended claims.

## Claims

1. A hydromount assembly (400) comprising:
a first chamber (428) and a second chamber (432);
an inertia track (436) separating the first chamber (428) and the second chamber (432), the inertia track (436) having a central opening (438) and including, relative to the central opening (438), a radially inner surface (444) and a radially outer surface (446), the inertia track (436) having a passage (458) between the radially inner surface (444) and the radially outer surface (446) that fluidly connects the first chamber (428) and the second chamber (432);
an engagement member (450) at least partially disposed in the opening (438) of the inertia track (436) and rigidly coupled to the inertia track (436) to move in unison with the inertia track (436);
a shaft (408) extending through the central opening (438), the shaft (408) including a first shaft section (440) and a second shaft section (442), the first shaft section (440) abutting the engagement member (450) on a first axial side and the second shaft section (442) abutting the engagement member (450) on a second, opposite axial side, wherein at least a portion of the first shaft section (440) extends through the central opening (438) and wherein at least a portion of the second shaft section (442) extends through the central opening (438); and
further including a first elastomeric element (426), a second elastomeric element (434), and a third elastomeric element (430) free of contact with each other.

2. The hydromount assembly of claim 1, wherein the first elastomeric element (426) is disposed on the first shaft section (440) and the second elastomeric element (434) is disposed on the second shaft section (442), and optionally
wherein the first elastomeric element (426) is at least partially disposed between the first shaft section (440) and the inertia track (436) and the second elastomeric element (434) is at least partially disposed between the second shaft section (442) and the inertia track (436).

3. The hydromount assembly of claim 1 or 2, wherein the passage is a serpentine passage.

4. The hydromount assembly of any preceding claim, wherein the engagement member (450) is annular, or wherein the engagement member (450) includes a diametrically outer surface (451) disposed at least partially in a groove (455) of the inertia track (436).

5. The hydromount assembly (400) of any preceding claim and further comprising:
an upper mount (401) having a fourth elastomeric element (416);
a lower mount (402) including an upper portion (403) having the first elastomeric element (426), a central portion (404) having the third elastomeric element (430), and a lower portion (405) having the second elastomeric element (434), the lower mount (402) including the shaft (408), wherein the upper portion (403) includes the first shaft section (440), the lower portion (405) includes the second shaft section (442), and the central portion (404) includes the engagement member (450) disposed in the inertia track (436) between the first shaft section (440) and the second shaft section (442); and
wherein the upper portion (403) and central portion (404) at least partially define the first chamber (428) and the lower portion (405) and the central portion (404) at least partially define the second chamber (432).

6. The hydromount assembly of claim 5, wherein the first elastomeric element (426), the second elastomeric element (434), and the third elastomeric element (430) are free of contact with each other, and optionally wherein the fourth elastomeric element (416) and the first elastomeric element (426) are in contact.

7. The hydromount assembly of claim 5 or 6, wherein the first elastomeric element (426) is bonded to the first shaft section (440), the second elastomeric element (434) is bonded to the second shaft section (442), and third elastomeric element (430) is bonded to the inertia track (436).

8. The hydromount assembly of claim 5, 6 or 7, wherein the upper portion (403) includes an upper housing (418) bonded to the first elastomeric element (426), the central portion (404) includes a central housing (420) bonded to the third elastomeric element (430), and the lower portion (405) includes a lower housing (422) bonded to the second elastomeric element (430).

9. The hydromount assembly of claim 5, 6, 7 or 8, wherein the first shaft section (440) and the second shaft section (442) sealingly engage the inertia track (436), or wherein the third elastomeric element (430) extends from the inertia track (430) to the housing (420) of the central portion (404) such that the first chamber (428) is sealed from the second chamber (432).

10. The hydromount assembly of claim 5, 6, 7, 8 or 9, wherein the third elastomeric element (430) is disposed at a radially outer surface of the inertia track (436), and optionally wherein the third elastomeric element (430) extends around the periphery of the inertia track (436).

11. A method of installing a hydromount assembly, the method comprising:
providing an upper mount (401) including a first elastomeric element (416), and a lower mount (402) including an upper portion (403) including a second elastomeric element (426), a central portion (404) including a third elastomeric element (430) and an inertia track (436) having a passage (458) that fluidly communicates with a first chamber (428) and a second chamber (432), and a lower portion (405) including a fourth elastomeric element (434);
aligning the upper portion (403), central portion (404), and lower portion (405), wherein the upper portion (403) and central portion (404) define the first chamber (428) and the lower portion (405) and the central portion (404) defines the second chamber (432), wherein the first chamber (428) and the second chamber (432) are separated by the inertia track (436) having a first central opening (438) about an axis (A) dimensioned to receive a shaft (408) therethrough, wherein the first shaft section (440) abuts the engagement member (450) on a first axial side and the second shaft section (442) abuts the engagement member (450) on a second, opposite axial side, and wherein at least one second opening (424) radially outwards of the inertia track (436) extends through the upper portion (403), central portion (404), and lower portion (405) along the axis (A); and
inserting at least one fastener (412) through the at least one second opening (424) to secure the upper portion (403), the central portion (404), and the lower portion (405) together.

12. The method of claim 11, wherein a third opening extends through the upper mount and is arranged to receive the fastener, and optionally including the step of disposing the at least one fastener into the at least one third opening.

13. A hydromount assembly (400) comprising:
an upper mount (401) having a first elastomeric element (416);
a lower mount (402) including an upper portion (403) having a second, different elastomeric element (426), a central portion (404) having a third, different elastomeric element (430), and a lower portion (405) having a fourth, different elastomeric element (434), the lower mount (402) including the shaft (408), wherein the upper portion (403) includes the first shaft section (440), the lower portion (405) includes the second shaft section (442), and the central portion (404) includes the engagement member (450) disposed in the inertia track (436) between the first shaft section (440) and the second shaft section (442), wherein the first shaft section (440) abuts the engagement member (450) on a first axial side and the second shaft section (442) abuts the engagement member (450) on a second, opposite axial side; and
an inertia track (436) having a passage (458) fluidly connected with a first chamber (428) and a second chamber (432), wherein the upper portion (403) and central portion (404) at least partially define the first chamber (428) and the lower portion (405) and the central portion (404) at least partially define the second chamber (432), wherein the inertia track (436) separates the first chamber (428) and the second chamber (432), the inertia track (436) having a first central opening (438) about an axis (A), wherein the shaft (408) extends through the first central opening (438).

14. The hydromount assembly of claim 13,
wherein the engagement member includes a diametrically outer surface (451) disposed at least partially in a groove of the inertia track.

## Patentansprüche

1. Hydrolageranordnung (400), umfassend:
eine erste Kammer (428) und eine zweite Kammer (432);
eine Trägheitsbahn (436), die die erste Kammer (428) und die zweite Kammer (432) trennt, wobei die Trägheitsbahn (436) eine zentrale Öffnung (438) aufweist und in Bezug auf die zentrale Öffnung (438) eine radial innere Fläche (444) und eine radial äußere Fläche (446) aufweist, wobei die Trägheitsbahn (436) einen Durchgang (458) zwischen der radial inneren Fläche (444) und der radial äußeren Fläche (446) aufweist, der die erste Kammer (428) und die zweite Kammer (432) fluidisch verbindet;
ein Eingriffselement (450), das zumindest teilweise in der Öffnung (438) der Trägheitsbahn (436) angeordnet und starr mit der Trägheitsbahn (436) gekoppelt ist, um sich gemeinsam mit der Trägheitsbahn (436) zu bewegen;
eine Welle (408), die sich durch die zentrale Öffnung (438) erstreckt, wobei die Welle (408) einen ersten Wellenabschnitt (440) und einen zweiten Wellenabschnitt (442) aufweist, wobei der erste Wellenabschnitt (440) an dem Eingriffselement (450) auf einer ersten axialen Seite und der zweite Wellenabschnitt (442) an dem Eingriffselement (450) auf einer zweiten entgegengesetzten axialen Seite anliegt, wobei sich mindestens ein Teil des ersten Wellenabschnitts (440) durch die zentrale Öffnung (438) erstreckt und wobei sich mindestens ein Teil des zweiten Wellenabschnitts (442) durch die zentrale Öffnung (438) erstreckt; und
ferner aufweisend ein erstes Elastomerelement (426), ein zweites Elastomerelement (434) und ein drittes Elastomerelement (430), die keinen Kontakt zueinander haben.

2. Hydrolageranordnung nach Anspruch 1, wobei das erste Elastomerelement (426) auf dem ersten Wellenabschnitt (440) und das zweite Elastomerelement (434) auf dem zweiten Wellenabschnitt (442) angeordnet ist, und
wobei optional das erste Elastomerelement (426) zumindest teilweise zwischen dem ersten Wellenabschnitt (440) und der Trägheitsbahn (436) angeordnet ist und das zweite Elastomerelement (434) zumindest teilweise zwischen dem zweiten Wellenabschnitt (442) und der Trägheitsbahn (436) angeordnet ist.

3. Hydrolageranordnung nach Anspruch 1 oder 2, worbei der Durchgang ein Serpentinendurchgang ist.

4. Hydrolageranordnung nach einem der vorhergehenden Ansprüche, wobei das Eingriffselement (450) ringförmig ist, oder wobei das Eingriffselement (450) eine diametrale äußere Fläche (451) aufweist, die zumindest teilweise in einer Nut (455) der Trägheitsbahn (436) angeordnet ist.

5. Hydrolageranordnung (400) nach einem der vorhergehenden Ansprüche und ferner umfassend:
eine obere Halterung (401) mit einem vierten Elastomerelement (416);
eine untere Halterung (402), die einen oberen Teil (403) mit dem ersten Elastomerelement (426), einen zentralen Teil (404) mit dem dritten Elastomerelement (430) und einen unteren Teil (405) mit dem zweiten Elastomerelement (434) aufweist, wobei die untere Halterung (402) die Welle (408) aufweist, wobei der obere Teil (403) den ersten Wellenabschnitt (440) aufweist, der untere Teil (405) den zweiten Wellenabschnitt (442) aufweist und der zentrale Teil (404) das Eingriffselement (450) aufweist, das in der Trägheitsbahn (436) zwischen dem ersten Wellenabschnitt (440) und dem zweiten Wellenabschnitt (442) angeordnet ist; und
wobei der obere Teil (403) und der zentrale Teil (404) zumindest teilweise die erste Kammer (428) definieren und der untere Teil (405) und der zentrale Teil (404) zumindest teilweise die zweite Kammer (432) definieren.

6. Hydrolageranordnung nach Anspruch 5, wobei das erste Elastomerelement (426), das zweite Elastomerelement (434) und das dritte Elastomerelement (430) keinen Kontakt zueinander haben und optional wobei das vierte Elastomerelement (416) und das erste Elastomerelement (426) in Kontakt stehen.

7. Hydrolageranordnung nach Anspruch 5 oder 6, wobei das erste Elastomerelement (426) mit dem ersten Wellenabschnitt (440), das zweite Elastomerelement (434) mit dem zweiten Wellenabschnitt (442) und das dritte Elastomerelement (430) mit der Trägheitsbahn (436) verbunden ist.

8. Hydrolageranordnung nach Anspruch 5, 6 oder 7, wobei der obere Teil (403) ein oberes Gehäuse (418) aufweist, das mit dem ersten Elastomerelement (426) verbunden ist, der zentrale Teil (404) ein mit dem dritten Elastomerelement (430) verbundenes zentrales Gehäuse (420) aufweist und der untere Teil (405) ein mit dem zweiten Elastomerelement (430) verbundenes unteres Gehäuse (422) aufweist.

9. Hydrolageranordnung nach Anspruch 5, 6, 7 oder 8, wobei der erste Wellenabschnitt (440) und der zweite Wellenabschnitt (442) abdichtend in die Trägheitsbahn (436) eingreifen, oder wobei sich das dritte Elastomerelement (430) von der Trägheitsbahn (430) bis zum Gehäuse (420) des zentralen Teils (404) erstreckt, sodass die erste Kammer (428) von der zweiten Kammer (432) abgedichtet ist.

10. Hydrolageranordnung nach Anspruch 5, 6, 7, 8 oder 9, wobei das dritte Elastomerelement (430) an einer radial äußeren Fläche der Trägheitsbahn (436) angeordnet ist, und wobei sich optional das dritte Elastomerelement (430) um den Umfang der Trägheitsbahn (436) erstreckt.

11. Verfahren zur Installation einer Hydrolageranordnung, wobei das Verfahren umfasst:
Bereitstellen einer oberen Halterung (401) mit einem ersten Elastomerelement (416) und einer unteren Halterung (402), die einem oberen Teil (403) mit einem zweiten Elastomerelement (426), einen zentralen Teil (404) mit einem dritten Elastomerelement (430) und einer Trägheitsschiene (436) mit einem Durchgang (458), der mit einer ersten Kammer (428) und einer zweiten Kammer (432) in Fluidverbindung steht, und einen unteren Teil (405) mit einem vierten Elastomerelement (434) aufweist;
Ausrichten des oberen Teils (403), des zentrales Teils (404) und des unteren Teils (405), wobei der obere Teil (403) und der zentrale Teil (404) die erste Kammer (428) definieren und der untere Teil (405) und der zentrale Teil (404) die zweite Kammer (432) definieren, wobei die erste Kammer (428) und die zweite Kammer (432) durch die Trägheitsbahn (436) getrennt sind, die eine erste zentrale Öffnung (438) um eine Achse (A) aufweist, die zur Aufnahme einer durchgehenden Welle (408) bemessen ist, wobei der erste Wellenabschnitt (440) an dem Eingriffselement (450) auf einer ersten axialen Seite anliegt und der zweite Wellenabschnitt (442) an dem Eingriffselement (450) auf einer zweiten, entgegengesetzten axialen Seite anliegt, und wobei sich mindestens eine zweite Öffnung (424) radial außerhalb der Trägheitsbahn (436) durch den oberen Teil (403), den zentralen Teil (404) und den unteren Teil (405) entlang der Achse (A) erstreckt; und
Einsetzen mindestens eines Befestigungselements (412) durch die mindestens eine zweite Öffnung (424), um den oberen Teil (403), den zentralen Teil (404) und den unteren Teil (405) aneinander zu befestigen.

12. Verfahren nach Anspruch 11, wobei sich eine dritte Öffnung durch die obere Halterung erstreckt und zur Aufnahme des Befestigungselements angeordnet ist, und optional enthaltend den Schritt des Anordnens des mindestens einen Befestigungselements in der mindestens einen dritten Öffnung.

13. Hydrolageranordnung (400), umfassend:
eine obere Halterung (401) mit einem ersten Elastomerelement (416);
eine untere Halterung (402), die einen oberen Teil (403) mit einem zweiten, unterschiedlichen Elastomerelement (426), einen zentralen Teil (404) mit einem dritten, unterschiedlichen Elastomerelement (430) und einen unteren Teil (405) mit einem vierten, unterschiedlichen Elastomerelement (434) aufweist, wobei die untere Halterung (402) die Welle (408) aufweist, wobei der obere Teil (403) den ersten Wellenabschnitt (440) aufweist, der untere Teil (405) den zweiten Wellenabschnitt (442) aufweist, und der zentrale Teil (404) das Eingriffselement (450) aufweist, das in der Trägheitsbahn (436) zwischen dem ersten Wellenabschnitt (440) und dem zweiten Wellenabschnitt (442) angeordnet ist, wobei der erste Wellenabschnitt (440) an dem Eingriffselement (450) auf einer ersten axialen Seite anliegt und der zweite Wellenabschnitt (442) an dem Eingriffselement (450) auf einer zweiten, entgegengesetzten axialen Seite anliegt; und
eine Trägheitsbahn (436) mit einem Durchgang (458), der fluidisch mit einer ersten Kammer (428) und einer zweiten Kammer (432) verbunden ist, wobei der obere Teil (403) und der zentrale Teil (404) die erste Kammer (428) zumindest teilweise definieren und der untere Teil (405) und der zentrale Teil (404) zumindest teilweise die zweite Kammer (432) definieren, wobei die Trägheitsbahn (436) die erste Kammer (428) und die zweite Kammer (432) trennt, wobei die Trägheitsbahn (436) eine erste zentrale Öffnung (438) um eine Achse (A) aufweist, wobei sich die Welle (408) durch die erste zentrale Öffnung (438) erstreckt.

14. Hydrolageranordnung nach Anspruch 13,
wobei das Eingriffselement eine diametral äußere Fläche (451) aufweist, die zumindest teilweise in einer Nut der Trägheitsbahn angeordnet ist.

## Revendications

1. Ensemble de montage hydraulique (400) comprenant :
une première chambre (428) et une deuxième chambre (432) ;
une piste d'inertie (436) séparant la première chambre (428) et la seconde chambre (432), la piste d'inertie (436) ayant une ouverture centrale (438) et comprenant, par rapport à l'ouverture centrale (438), une surface radialement intérieure (444) et une surface radialement extérieure (446), la piste d'inertie (436) ayant un passage (458) entre la surface radialement intérieure (444) et la surface radialement extérieure (446) qui relie de façon fluide la première chambre (428) et la seconde chambre (432) ;
un élément d'engagement (450) au moins partiellement disposé dans l'ouverture (438) de la piste d'inertie (436) et couplé rigidement à la piste d'inertie (436) pour se déplacer en liaison avec la piste d'inertie (436) ;
un arbre (408) s'étendant à travers l'ouverture centrale (438), l'arbre (408) comprenant une première section d'arbre (440) et une deuxième section d'arbre (442), la première section d'arbre (440) venant en butée contre l'élément d'engagement (450) sur un premier côté axial et la deuxième section d'arbre (442) venant en butée sur un deuxième, côté axial opposé, dans lequel au moins une partie de la première section d'arbre (440) s'étend à travers l'ouverture centrale (438) et dans lequel au moins une partie de la deuxième section d'arbre (442) s'étend à travers l'ouverture centrale (438) ; et
comprenant en outre un premier élément élastomère (426), un deuxième élément élastomère (434) et un troisième élément élastomère (430) sans contact entre eux.

2. Ensemble de montage hydraulique selon la revendication 1, dans lequel le premier élément élastomère (426) est disposé sur la première section d'arbre (440) et le second élément élastomère (434) est disposé sur la seconde section d'arbre (442), et éventuellement
dans laquelle le premier élément élastomère (426) est disposé au moins partiellement entre la première section d'arbre (440) et la piste d'inertie (436) et le second élément élastomère (434) est disposé au moins partiellement entre la seconde section d'arbre (442) et la piste d'inertie (436).

3. Ensemble de montage hydraulique selon la revendication 1 ou 2, dans lequel le passage est un passage en serpentin.

4. Ensemble de montage hydraulique de toute revendication précédente, dans lequel l'élément d'engagement (450) est annulaire, ou dans lequel l'élément d'engagement (450) comprend une surface diamétralement extérieure (451) disposée au moins partiellement dans une rainure (455) de la piste d'inertie (436).

5. Ensemble de montage hydraulique (400) de toute revendication précédente et comprenant en outre :
une monture supérieure (401) ayant un quatrième élément élastomère (416) ;
une monture inférieure (402) comprenant une partie supérieure (403) ayant le premier élément élastomère (426), une partie centrale (404) ayant le troisième élément élastomère (430), et une partie inférieure (405) ayant le deuxième élément élastomère (434), la monture inférieure (402) comprenant l'arbre (408), dans laquelle la partie supérieure (403) comprend la première section d'arbre (440), la partie inférieure (405) comprend la deuxième section d'arbre (442), et la partie centrale (404) comprend l'élément d'engagement (450) disposé dans la piste d'inertie (436) entre la première section d'arbre (440) et la seconde section d'arbre (442) ; et
dans laquelle la partie supérieure (403) et la partie centrale (404) définissent au moins partiellement la première chambre (428) et la partie inférieure (405) et la partie centrale (404) définissent au moins partiellement la seconde chambre (432).

6. Ensemble de montage hydraulique selon la revendication 5, dans lequel le premier élément élastomère (426), le deuxième élément élastomère (434) et le troisième élément élastomère (430) ne sont pas en contact l'un avec l'autre, et éventuellement dans lequel le quatrième élément élastomère (416) et le premier élément élastomère (426) sont en contact.

7. Ensemble de montage hydraulique selon la revendication 5 ou 6, dans lequel le premier élément élastomère (426) est lié à la première section d'arbre (440), le deuxième élément élastomère (434) est lié à la deuxième section d'arbre (442) et le troisième élément élastomère (430) est lié au piste d'inertie (436).

8. Ensemble de montage hydraulique selon la revendication 5, 6 ou 7, dans lequel la partie supérieure (403) comprend un boîtier supérieur (418) lié au premier élément élastomère (426), la partie centrale (404) comprend un boîtier central (420) lié au troisième élément élastomère (430), et la partie inférieure (405) comprend un boîtier inférieur (422) lié au second élément élastomère (430).

9. Ensemble de montage hydraulique selon les revendications 5, 6, 7 ou 8, dans lequel la première section d'arbre (440) et la deuxième section d'arbre (442) s'engagent de manière étanche dans la piste d'inertie (436), ou dans lequel le troisième élément élastomère (430) s'étend depuis la piste d'inertie (430) au boîtier (420) de la partie centrale (404), de sorte que la première chambre (428) est étanche depuis la deuxième chambre (432).

10. Ensemble de montage hydraulique selon les revendications 5, 6, 7, 8 ou 9, dans lequel le troisième élément élastomère (430) est disposé sur une surface radialement extérieure de la piste d'inertie (436), et éventuellement dans lequel le troisième élément élastomère (430) s'étend sur la périphérie de la piste d'inertie (436).

11. Procédé d'installation d'un ensemble hydraulique, le procédé comprenant :
fournir une monture supérieure (401) comprenant un premier élément élastomère (416), et une monture inférieure (402) comprenant une partie supérieure (403) comprenant un deuxième élément élastomère (426), une partie centrale (404) comprenant un troisième élément élastomère (430) et une piste d'inertie (436) ayant un passage (458) qui communique fluidiquement avec une première chambre (428) et une deuxième chambre (432), et une partie inférieure (405) incluant un quatrième élément élastomère (434) ;
l'alignement de la partie supérieure (403), de la partie centrale (404) et de la partie inférieure (405), dans lequel la partie supérieure (403) et la partie centrale (404) définissent la première chambre (428) et la partie inférieure (405) et la partie centrale (404) définit la seconde chambre (432), dans lequel la première chambre (428) et la seconde chambre (432) sont séparées par la piste d'inertie (436) ayant une première ouverture centrale (438) autour d'un axe (A) conçu pour recevoir un arbre (408) traversant la seconde chambre, dans laquelle la première section d'arbre (440) est adjacente à l'élément d'engagement (450) sur un premier côté axial et la deuxième section d'arbre (442) est adjacente à l'élément d'engagement (450) sur un deuxième côté axial opposé, et dans laquelle au moins une deuxième ouverture (424) s'étend radialement vers l'extérieur de la piste d'inertie (436) et traverse la partie supérieure (403), la partie centrale (404) et la partie inférieure (405) suivant l'axe (A) ; et
l'insertion d'au moins un élément de fixation (412) à travers l'au moins une seconde ouverture (424) pour fixer la partie supérieure (403), la partie centrale (404) et la partie inférieure (405) ensemble.

12. Procédé selon la revendication 11, dans lequel une troisième ouverture s'étend à travers le support supérieur et est agencée pour recevoir l'élément de fixation, et comprenant éventuellement l'étape consistant à disposer l'au moins un élément de fixation dans la au moins une troisième ouverture.

13. Ensemble de montage hydraulique (400) comprenant :
une monture supérieure (401) ayant un premier élément élastomère (416) ;
une monture inférieure (402) comprenant une partie supérieure (403) ayant un deuxième élément élastomère différent (426), une partie centrale (404) ayant un troisième élément élastomère différent (430), et une partie inférieure (405) ayant un quatrième élément élastomère différent (434), la monture inférieure (402) incluant la tige (408), dans laquelle la partie supérieure (403) comprend la première section (440) de tige, la partie inférieure (405) comprend la deuxième section d'arbre (442), et la partie centrale (404) comprend l'élément d'engagement (450) disposé dans la piste d'inertie (436) entre la première section d'arbre (440) et la deuxième section d'arbre (442), où la première section d'arbre (440) appuie l'élément d'engagement (450) sur un premier côté axial et la deuxième section d'arbre (442) s'applique sur un second côté axial opposé contre l'élément d'engagement (450) ; et
une piste d'inertie (436) ayant un passage (458) relié fluidiquement à une première chambre (428) et une seconde chambre (432), dans laquelle la partie supérieure (403) et la partie centrale (404) définit au moins partiellement la première chambre (428) et la partie inférieure (405) et la partie centrale (404) définissent au moins partiellement la deuxième chambre (432), dans laquelle la piste d'inertie (436) sépare la première chambre (428) et la deuxième chambre (432), la piste d'inertie (436) ayant une première ouverture centrale (438) autour d'un axe (A), l'arbre (408) traversant la première ouverture centrale (438).

14. Le ensemble de montage hydraulique selon la revendication 13,
dans laquelle l'élément d'engagement comprend une surface diamétralement extérieure (451) disposée au moins partiellement dans une rainure de la piste d'inertie.
